(19) Europäisches Patentamt
European Patent Office
Office européen des brevets

(11) EP 4 566 746 A1

(12) **EUROPEAN PATENT APPLICATION**

(43) Date of publication:
**11.06.2025 Bulletin 2025/24**

(21) Application number: **23214608.4**

(22) Date of filing: **06.12.2023**

(51) International Patent Classification (IPC):
*B23K 9/04* (2006.01)     *B23K 31/00* (2006.01)
*B33Y 10/00* (2015.01)     *G06N 3/09* (2023.01)

(52) Cooperative Patent Classification (CPC):
**B23K 9/04; B23K 31/006; B33Y 30/00;**
**B33Y 50/02; G06N 3/006; G06N 3/09;** B22F 10/25

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **3D-Components AS**
**0380 Oslo (NO)**

(72) Inventor: **Azar, Amin S.**
**0380 Oslo (NO)**

(74) Representative: **Bryn Aarflot AS**
**Patent**
**Stortingsgata 8**
**0161 Oslo (NO)**

(54) **A METHOD AND SYSTEM FOR DETERMINING AND MONITORING AUTOMATED ADDITIVE MANUFACTURING PROCESS PARAMETERS**

(57) A method for performing an automated additive manufacturing (AM) process comprising obtaining a set of first AM factors associated with performing a first AM process and obtaining a set of first characteristics of a first AM output, wherein the first AM output is generated by performing the first AM process using the set of first AM factors. A predictor is trained using the set of first AM factors and the set of first characteristics, which is a machine learning model, and a mathematical model is generated based on extracting internal parameters of the predictor. The mathematical model comprising represents an estimated relationship between first AM factors and first characteristics. A set of target characteristics is obtained and, using the mathematical model, a set of second AM factors is identified. The set of second AM factors are then used to perform a second AM process, generating a second AM output.

Figure 1

**Description**

FIELD OF INVENTION

Aspects of the present disclosure relate to additive manufacturing processes. Specifically, but not exclusively, aspects of the present disclosure are directed to the use of machine learning in combination with mathematical modelling for automation of an additive manufacturing process. Specially, but not exclusively, aspects of the present disclosure are directed to methods and systems for mathematical model-assisted selection and monitoring of additive manufacturing process parameters.

BACKGROUND

Additive manufacturing (AM), such as welding, surface coating, three-dimensional (3D) printing, and directed energy deposition (DED), is a rapidly growing field that has revolutionized the manufacturing industry. More recently, AM processes use digital models to create objects by adding successive layers of material. As AM processes are highly complex, the process relies on precise control of process parameters among other factors to ensure the quality and accuracy of the final product. Even minor changes in environment of material properties can lead to substantial changes to product quality.

For example, DED involves utilizing a directed energy source, such as a laser or electric arc, to melt and fuse material onto a substrate. This process is facilitated by a delivery mechanism, such as a nozzle, which directs the flow of material, which may be in the form of powder or wire, onto the substrate surface, where it is melted and fused to create a solid object. To achieve the desired object shape and characteristics, the nozzle and energy source are precisely controlled to move in a specific three-dimensional pattern and deposit the material bead by bead. DED is a widely used technique in several industries, including aerospace, defence, and medical sectors, for creating and repairing intricate, high-performance components with complex geometries and engineered material properties.

The stability of the DED process is subject to stochastic variations, which are contingent on the tool path and type of material. Consequently, it is necessary for AM process parameters to change and be modified throughout, and it can be difficult to efficiently configure the target set of process parameters within desired time frames, especially due to presence of multiple configurable parameters.

To achieve a high level of precision in such a complex environment, sensors typically play a crucial role. Sensorial systems are required in AM industry for a multitude of tasks, including: mitigating the labour-intensive nature of finding and certifying the process parameters; and ensuring quality control. Despite significant technological advancements in sensor systems, the determination of optimal process parameters and their influence on the final properties of printed objects remains a highly challenging and resource-intensive task. To establish stable processes with given feedstock and substrate materials within a single AM technology, engineers invest hundreds of hours in research and development. Additionally, sensors in additive manufacturing help to ensure that the final product meets the required quality standards. Sensors can detect any deviations from the desired parameters and operators are subsequently alerted, who can then stop the process and, where possible, modify necessary parameters.

The implementation of sensorial systems is a complex task, extending beyond hardware systems and into complex integrated software systems, and necessitates a focused approach towards the generation and processing of meaningful data. The deployment of limited processing systems inhibits the ability to perform real-time data processing and presents a hindrance to the deployment of systems with high-speed decision-making capabilities. The lack of efficient and effective processing systems impedes the effectiveness of the sensorial system, leading to suboptimal outcomes. Additionally, addressing limitations of processing capacity for processing all the sensory data cannot simply be accomplished through the use of excessively large and expensive hardware, as this can have a negative impact on energy, efficiency, and use of computational resources.

Document US 2018/0264553 A1 is an example of a multi-sensor-based system for monitoring AM process. The sensor data is used by machine-learning models, including classifiers such as support vector machines (SVMs) or artificial neural networks, to predict future states of AM processes or detect defects. The AM process is then monitored using the predicted future state. However, such models are difficult to reverse engineer, and the relationship between current and future AM states based on data from multiple sensors is difficult to extract, let alone understand, interpret, and correlate to a specific feature with impeccable repeatability. There is also a need for further processing to calculate optimal AM operation parameters based on deviations between a current and future state, or a future and target state, requiring additional machine learning models or human input. Additionally, the data-heavy approach necessitates large computationally complex machine learning models and hence require extensive computational resources and energy to operate, especially real-time. Therefore, such approaches are limited in both efficiency and understandability.

SUMMARY OF INVENTION

According to an aspect of the present disclosure, there is provided a method for performing an automated additive manufacturing (AM) process. The method comprises obtaining a set of first AM factors and a set of first characteristics. The set of first AM factors comprise one or more AM process inputs associated with performing a first AM process. The set of first characteristics, obtained from a sensor, comprise one or more geometric or physical properties of a first AM output, wherein the first AM output is generated by performing the first AM process using the set of first AM factors. The method further comprises training a predictor using the set of first AM factors and the set of first characteristics, wherein the predictor is a machine learning model configured to generate the set of first characteristics based on the set of first AM factors. A mathematical model is generated based on extracting one or more predictor parameters, wherein the one or more predictor parameters are associated with internal parameters of the predictor. The mathematical model comprises a prediction function that represents an estimated relationship between the one or more AM process inputs and the one or more geometric or physical properties. A set of target characteristics is obtained, wherein the set of target characteristics comprise one or more geometric or physical properties of a target AM output. Using the mathematical model, a set of second AM factors are identified based on the target characteristics. The set of second AM factors comprise one or more AM process inputs associated with performing a second AM process. The set of second AM factors are then used to perform the second AM process, thereby generating a second AM output.

According to a further aspect of the present disclosure, there is provided a system comprising apparatus configured to perform one or more AM processes and a sensor configured to determine one or more geometric or physical properties of an output of the one or more AM processes. The system further comprises a GPU processor configured to obtain data from the apparatus and the sensor, and a memory storing instructions that, when executed, cause the system to perform any of the methods disclosed herein.

According to an additional aspect of the present disclosure, there is provided a computer-readable storage medium, which is transitory or non-transitory, comprising one or more program instructions which, when executed by one or more processors, cause the one or more processors to perform any of the methods disclosed herein.

Beneficially, complex sensorial systems are not required, and the use of a mathematical model increases both the speed and efficiency of the automated AM process. The mathematical model allows for quick and precise adjustments to be made, resulting in a higher-quality product, allowing for efficient real-time compensation of changes in AM process conditions. Furthermore, the above aspects help prevent or discover defects, resulting in reduced waste and cost, resource, and energy savings for the manufacturer. The above-described aspects also streamline the process of obtaining robust and valid process parameters, helping result in more innovative AM and welding industries and accelerating the time to market for novel AM products.

Additional benefits include improving efficiency, enhancing safety, and overcoming the current requirements for implementing complex sensorial systems that rely on large computational resources. For example, the above aspects improve efficiency by optimizing the manufacturing process. By monitoring key parameters such as material usage and machine performance, opportunities for process optimization can be identified and improvements to the manufacturing process can be made in a time-efficient manner. This can help to reduce the time and resources required for production, resulting in increased efficiency and profitability. The above aspects also enhance safety by detecting and preventing potential hazards. For example, a sensor in combination with the mathematical model can be used to monitor critical ranges of process parameters and alert the operator to any potential quality and safety risks. This can help to prevent accidents and ensure the safety of the operator and other personnel in the manufacturing facility.

BRIEF DESCRIPTION OF DRAWINGS

Embodiments of the invention will now be described, by way of example only, and with reference to the accompanying drawings, in which:

Figure 1 illustrates a system architecture for performing an automated AM process;

Figure 2 illustrates a system architecture for performing an automated AM process using a predictor and a mathematical model;

Figure 3 shows a plurality of plots illustrating relationships between a geometric or physical property and an AM process input; and

Figure 4 shows a flow-chart illustrating a method for performing an automated AM process by generating a mathematical model;

Figure 5 shows a flow-chart illustrating a method for updating an automated AM process;

Figure 6 shows a flow-chart illustrating a method for updating a mathematical model and outputting a plot;

Figure 7 shows an example computing environment for performing any of the methods described herein.

DETAILED DESCRIPTION

Embodiments of the present disclosure will now be described with reference to the attached figures. It is to be noted that the following description is merely used for enabling the skilled person to understand the present disclosure, without any intention to limit the applicability of the present disclosure to other embodiments which could be readily understood and/or envisaged by the reader. In particular, whilst the present disclosure is primarily directed to the automated additive manufacturing (AM) process, the skilled person will appreciate that the methods and systems described herein are applicable to the automation and optimisation of other manufacturing processes, such as subtractive manufacturing.

In one embodiment, the present disclosure relates to a system for AM, e.g., directed energy deposition such as welding, comprising a linear laser scanning profilometer situated proximate to the light radiating source to obtain geometric or physical data from the deposited material. The system further comprises a control architecture, powered by a processing unit such as a GPU, which processes the obtained sensor data and compares it with previously trained values using a mathematical model based on a machine learning algorithm, such as an artificial neural network. If an observed deviation is detected, the system calculates new process parameters in real-time, and applies them at the correct location, with the assistance of the robot positioning data.

Additionally, the system can be directed towards generating new process parameters, e.g., without requiring observed deviations and modification to existing parameters, such as at the start of an AM process.

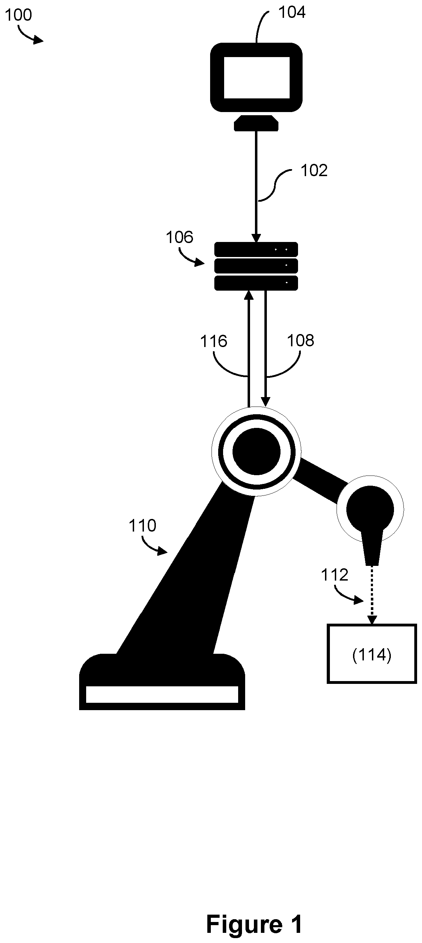

Figure 1 illustrates a system architecture for performing an automated AM process. Specifically, Figure 1 shows a system 100 according to an example embodiment of the present disclosure, wherein system 100 is configured to perform an AM process to generate a targeted AM output based on AM process parameters identified using a mathematical model.

System 100 comprises target characteristics 102, a device 104, a processor 106, AM factors 108, AM apparatus 110, an AM process 112, an AM output 114, and AM apparatus data 116.

System 100 is configured such that target characteristics 102 of a targeted AM output are obtained from a device 104 at a processor 106. The processor 106 calculates the AM factors 108 most likely to result in the targeted AM output when used by AM apparatus 110 through use of a mathematical model. AM apparatus 110 then performs an AM process 112, resulting in the generation of an AM output 114.

By using system 100, determining the AM factors 108 required for performing an AM process 112 capable of generating a targeted AM output is optimised. System 100 therefore results in a high-quality AM output 114 based on target characteristics 102, with improved efficiency regarding time, energy, materials, and resources in comparison to alternative iterative, repetitive, and labour-intensive processes of determining the AM factors 108.

Target characteristics 102 are obtained by the processor 106 and comprise one or more geometric or physical properties of the targeted AM output, such as height, width, length, area, depth, or any combination thereof. The target characteristics 102 are associated with the shape of the targeted AM output, such as the geometric or physical properties of a 3D finished design, a single layer of a finished design, or a single weld bead of a single layer. Optionally, target characteristics 102 are obtained from a device 104, the processor 106, an external device not depicted here, or by an operator, such as a designer aided by standard design-aiding software. Device 104 is therefore not essential to system 100, and is included for illustrative purposes only. Further optionally, target characteristics 102 are associated with the quality of the targeted AM output, such as a final material quality.

The processor 106 is one of one or more processors of system 100, such as a graphics processing unit (GPU). The processor 106 uses a mathematical model to determine a set of AM factors 108 suitable for generating the targeted AM output using AM apparatus 110. The processor 106 is communicatively coupled to AM apparatus 110, such that data associated with AM apparatus 110, AM apparatus data 116, is obtained by the processor 106. The AM factors 108 are therefore specific to the AM apparatus 110, resulting in more accurate determination of AM factors 108. AM apparatus data 116 comprises data associated with the AM apparatus 110, such as operation parameters.

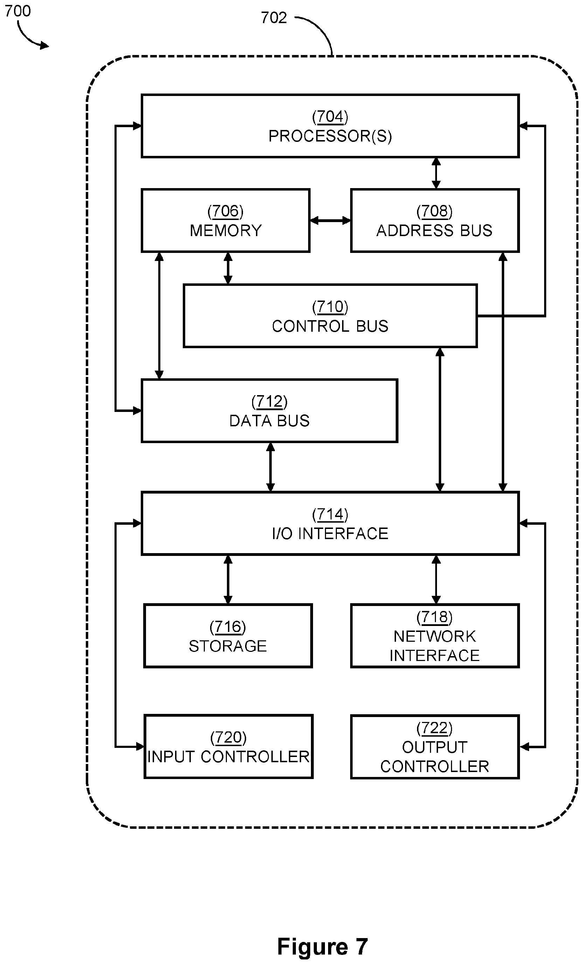

For example, the AM factors 108 will be within a safe operational parameter space for the AM apparatus 110. Preferably, the processor 106 is local, such as a 32 GB GPU processor communicatively coupled to the AM apparatus. Alternatively or additionally, the processor 106 is an edge device, cloud-based, or server-based processor. Optionally, device 104 comprises processor 106 and a computer-readable storage medium that can be accessed by processor 106. For example, device 104 is computing device 702 of Figure 7.

The AM factors 108 comprise one or more AM process inputs, also known as process parameters, associated with the AM apparatus 110 for performing an AM process, such as input power, speed, voltage, or current. The AM factors 108 optionally contain material specific properties, such as material composition, physical/chemical structure, or temperature. For example, where the AM apparatus 110 is configured for welding DED, the AM process inputs comprise any of arc current, arc voltage, travel speed, wire feeding rate, or any combination thereof. In this welding example, the AM apparatus comprises a robotic arm configured for welding, a user interface, a sensor, one or more means for communicatively connecting to processor 106 (e.g., Wi-Fi, Bluetooth, or a wired connection), and a welding power source. Optionally, the AM apparatus is further configured to generate a visualisation of the robotic arm and/or the AM process 112 to aid in monitoring and control of the AM apparatus and/or AM process 112.

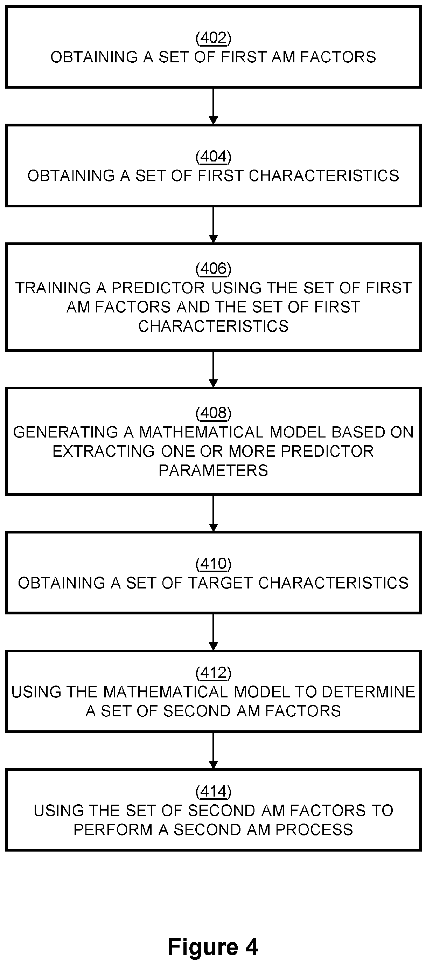

By performing the AM process 112, e.g., welding a metal, based on the determined AM factors 108, AM apparatus 110 produces an AM output 114, e.g., a welded metal, based on a target AM output. As mentioned above, system 100 advantageously eliminates the need for extensive iterative AM factor determination processes, which waste time, energy, and resources. A method for determining AM factors 108 from target characteristics 102 is described in detail below in relation to method 400 of Figure 4.

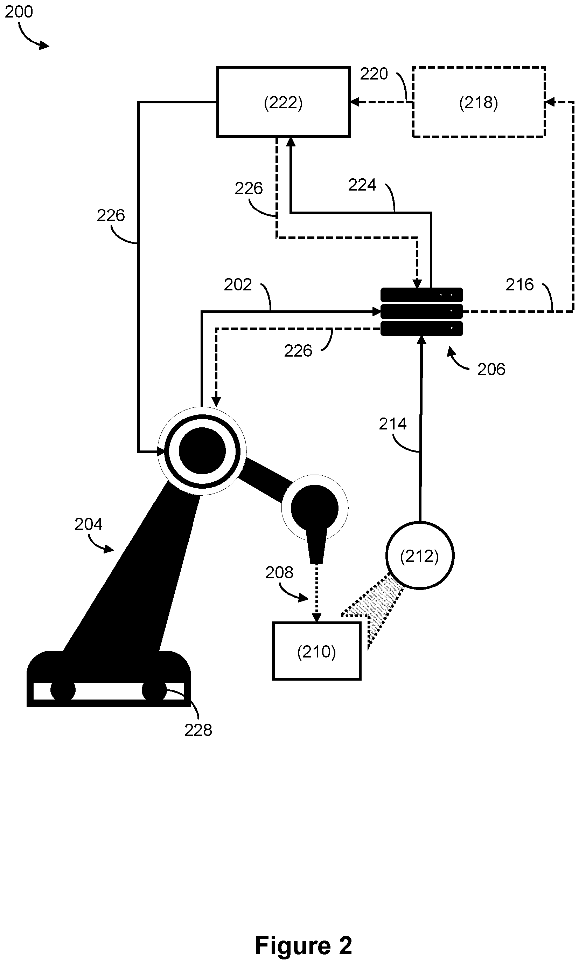

Figure 2 illustrates a system architecture for performing an automated AM process using a predictor and a mathematical model. Specifically, Figure 2 is directed towards a system 200 configured to implement any of method 400, method 500, or method 600 described below. Additionally, system 200 comprises aspects of system 100 of Figure 1.

System 200 comprises first AM factors 202, AM apparatus 204, processor 206, AM process 208, AM output 210, sensor 212, first characteristics 214, AM data 216, predictor 218, predictor parameters 220, mathematical model 222, target characteristics 224, second AM factors 226, and mobile unit 228.

System 200 obtains first AM factors 202 from AM apparatus 204, which is received at a processor 206, such as using step 402 of method 400. The AM apparatus 204 performs an AM process 208, which results in the generation of an AM output 210. A sensor 212 obtains first characteristics 214 associated with geometric or physical properties of the AM output 210, such as using step 404 of method 400. AM data 216 is comprised of the first AM factors 202 and first characteristics 214, which is used to train a predictor 218. Optionally, the processor 206 aligns or otherwise processes the first AM factors 202 and first characteristics 214 e.g., based on one or more time points. Optionally, AM data 216 further comprises historical AM data, such as historical AM factors and corresponding historical characteristics, simulated AM data, or other AM data such as AM data associated with a different AM apparatus.

For example, the predictor 218 is a machined learning model trained using step 406 of method 400. Predictor parameters 220 associated with internal parameters of the predictor 218 are extracted to generate a mathematical model 222, such as using step 408 of method 400. The mathematical model 222 uses target characteristics 224, which can be provided by the processor 206, to determine second AM factors 226, such as by using step 412 of method 400. The second AM factors 226 are then used by the AM apparatus 204 to perform further AM processes, e.g., AM process 208, such as using step 414 of method 400.

After the predictor 218 is trained and the mathematical model 222 is generated, processor 206 can obtain target characteristics 224, such as using step 410 of method 400, and the mathematical model identifies second AM factors 226. The second AM factors 226 are then used by AM apparatus 204 to perform AM process 208, resulting in generation of AM output 210 associated with target characteristics 224.

Optionally, sensor 212 obtains second characteristics from AM output 210 and AM data 216 further comprises second AM factors 226 and second characteristics. The predictor 218 is trained using AM data 216 and the mathematical model 218 updated based on extracting updated parameters from the predictor 218, such as using steps 602 - 606 of method 600. Alternatively or additionally, the second characteristics are compared to the target characteristics 224 and processor 206 determines a difference. Based on the difference, mathematical model 222 is used to modify the second AM factors 226 to compensate for the difference, such as using steps 502 - 506 of method 500.

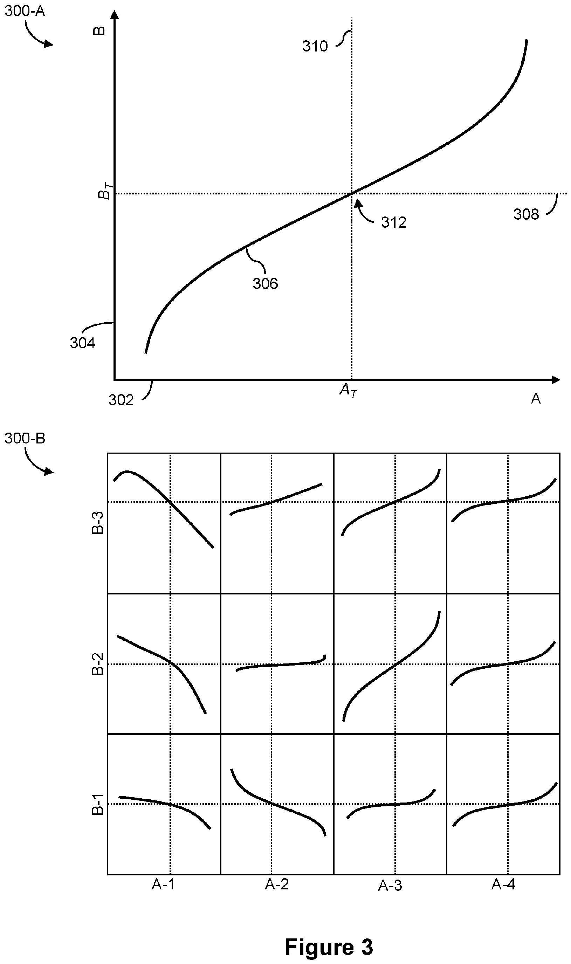

Further optionally, processor 206 is configured to output a plot of first AM factor 202 against first characteristics 214, such as using step 608 of method 600. For example, processor 206 outputs a plot to device 104 of system 100, such as plot 300-A or 300-B of Figure 3.

For example, system 200 can be used in the process of acquiring deposited bead data and using it for controlling the AM and welding process. In this example, the AM apparatus 204 is a DED or welding robot, and the AM process 208 comprises use of a deposition tool e.g., in the form of a welding torch. Sensor 212 is a linear laser scanning profilometer or seam tracker, optionally attached to the processing head of AM apparatus 204 and in close proximity to a processing location. AM output 210 comprises a substrate for deposition or weldment and AM process 208 deposits a single deposited bead under a predetermined set of process parameters. The dimensions of the deposited bead, such as its width and height, are proportional to the process parameters applied during the deposition process. Such information is utilized to determine the optimal set of process parameters required for achieving the desired dimensions of the deposited bead, e.g., second AM factors 226.

A digital representation of the deposited bead is optionally obtained through data from sensor 212, which can be processed by sensor 212 or processor 206. Such a digital representation serves as a valuable tool for analysing and evaluating the performance of the deposition process, such as by processor 206. The digital data provides a comprehensive and accurate representation of the deposited bead, facilitating the identification of any defects or irregularities that may arise during the welding process. An analysis of a digital representation obtained from the sensor 212 is performed and parameters extracted, the parameters comprising bead width and height, along with any determined deviations. Preferably, the data processing is performed exclusively onboard the sensor 212, without necessitating the utilization of any external computational resources.

The predictor 218 gathers and correlates bead dimensions with the associated process parameters, which is used in generating a mathematical expression based on the compiled data. This mathematical expression forms part of mathematical model 222. Processor 206, preferably a high-performance processing unit such as a GPU, uses the mathematical model 222 for predictive controlling of the AM process 208. This results in a direct control channel between the material processing and sensorial readings, correcting them on demand based on the obtained geometric or physicalal data of the deposited material shape and use of the mathematical model 222.

As well as performing initial training, such as using method 400 of Figure 4 below, initiating the predictor 218 and mathematical model 222 to accurately predict the AM process 208, e.g., to automate AM apparatus 204, optionally requires testing steps. For example, the first step includes using sensor 212 to obtain a set of base characteristics of a workpiece, or other pre-process material or empty workspace, before the testing AM process is performed. The second step is performing the testing AM process and obtaining a set of test AM factors associated with performing the process. The third step is obtaining a set of test characteristics of the test output generated via the testing AM process. A database of the obtained data, e.g., the set of base characteristics, the set of test AM factors, and the set of test characteristics, is formed, such that the difference between the set of base characteristics and the set of test characteristics can be determined for calibration purposes. Optionally, this process is repeated such that a plurality of sets of test AM factors is obtained, representing the safe and/or efficient operating space of the AM apparatus 204. The plurality of sets of test characteristics can be used to determine a plurality of set of predicted AM factors using the mathematical model, and the robustness of the mathematical model can be determined over the available parameter space. Additionally, or alternatively, the obtained data can be further used to train the predictor to increase the accuracy of the mathematical model.

Generating and testing AM factors using system 200 takes substantially less time than discovering, testing, and finalising AM factors using traditional AM systems. For example, when system 200 is applied, steps involve preparing the AM apparatus 204, generating AM factors using the mathematical model 222, performing the AM process 208, and obtaining characteristics associated with the output generated from the AM process (data collection and processing) using sensor 212 and, optionally, processor 206. When a traditional AM system is applied, steps involve preparing the AM apparatus, discovering relevant/plausible AM factors, performing an AM process, analysing the output of the AM process (e.g. cutting/extraction, sample preparation, grinding/polishing/isolating the sample, etching, taking microscope measurements and potentially other measurements, and other standard procedures), and reporting the analysis, which often then requires adjusting the plausible AM factors and repeating the above steps to discover increasingly optimal AM factors.

Using a sensor 212 configured to obtain geometric or physical data, such as a linear scanning sensor, is faster, more automatic, and less prone to errors than using microscopes and the like. For example, when applied to welding, geometric or physical properties of a plurality of weld beads can be obtained quickly and reliably, and such data can be used in-process for monitoring the AM process. Additionally, optimal AM factors are generated quickly and accurately via use of the mathematical model. Overall, the time and efficiency savings of using system 200 are substantial, as are potential savings to physical and computational resources. Optionally, sensor 212 is configured to determine the hardness data, and first characteristics 212 comprise hardness or other material properties in addition to or as an alternative to geometric or physical properties, where hardness data is associated with the quality of the AM process 208 and/or AM output 210.

System 200 optionally further comprises a database. The database comprises historical AM factors and/or simulation-based AM factors for either AM apparatus 204, AM process 208, and/or a different AM apparatus or AM processes. The database is communicatively coupled to any of AM apparatus 201, sensor 212, processor 206, predictor 218, mathematical model 222, or a combination thereof. For example, the database is a communicatively coupled via a network to processor 206, and the database is a cloud-based or otherwise accessed from an external location, such as an online repository. Alternatively, the database is local.

The database is configured to store AM data 216 or any combination of first AM factors 202, information associated with AM output 210, first characteristics 214, and information associated with AM apparatus 204 and/or AM process 208. Alternatively, the database is configured for access only. For example, the database is accessed to determine historical AM factors used to produce an AM output similar to a target AM output. E.g., when welding a first wire onto a first substrate, the database is accessed to determine whether historical/simulated AM factors are stored for welding the first wire onto the first substrate. These historical/simulated AM factors are used instead of second AM factors 226 or used by mathematical model 222 in determining second AM factors 226. In another example, information stored in the database is used to determine safe/optimal operating conditions of the AM apparatus 204, which can be used by predictor 218 and/or mathematical model 222 to determine boundary conditions when determining AM factors.

Optionally, system 200 comprises system 100 of Figure 1, where AM apparatus 204 is AM apparatus 110, processor 206 is processor 106, AM process 208 is AM process 112, AM output 210 is AM output 114, and the mathematical model 222 is accessibly by processor 106. For example, AM apparatus 110 comprises mobile unit 228 and/or AM apparatus 204 does not comprise mobile unit 228.

System 100 or system 200 is configured to be stationary or mobile depending on, for example, the AM apparatus, the AM process, the manoeuvrability of the AM output, the environmental conditions required for the AM process, or other consideration regarding the location. In one example, the AM apparatus 204 is in a first location while processor 206 is in a second location. In another example, the AM apparatus 204 and the processor 206 are in a first location and the system 200 is accessed or otherwise monitored from a second location. In a further example, the AM apparatus 204 is mounted on a mobile unit 228 configured to be moved and controlled such that the AM process 208 can be performed remotely. For example, mobile unit 228 comprises one or more means for mobility and/or manoeuvrability of apparatus 204, such as one or more wheels.

Figure 3 shows a plurality of plots illustrating relationships between a geometric or physical property and an AM process input. Specifically, Figure 3 shows a plot 300-A of a geometric or physical property against an AM process input and a plot 300-B of a plurality of geometric or physical properties against a plurality of AM process inputs, such as the set of first characteristics against the set of first AM factors defined in relation to method 400 of Figure 4 below.

Plot 300-A comprises an x-axis 302 representing an operable range of the AM process input A, a y-axis 304 representing a geometric or physical property B, a line 306 representing the relationship between A and B, a target geometric or physical value $B_T$ represented by a target geometric or physical value line 308, a target input value $A_T$ represented by a target input value line 310, and an intercept point 312.

Plot 300-A shows how a target geometric or physical value $B_T$ corresponding to the target geometric or physical value line 308. The target geometric or physical value $B_T$ represents a targeted value of geometric or physical property B, e.g., as one of the one or more geometric or physical properties that make up the set of target characteristics obtained in step 410 of method 400, or target characteristics 224 of system 200. Line 306 represents the relationship between A and B, how B changes as A changes, e.g., based on the prediction function of the mathematical model generated in step 408 of method 400. The position where the target geometric or physical value line 308 intercepts with the line 306, the intercept point 312, represents the value for A required to generate target geometric or physical value $B_T$, which is the target input value $A_T$. Therefore, plot 300-A shows how the mathematical model can be used to determine an AM process input based on a geometric or physical property as in step 412 of method 400 below. Additionally, plot 300-A shows how the mathematical model can be used to determine a predicted geometric or physical property based on a known AM process input.

Optionally, geometric or physical property B is a material property B, such that plot 300-A shows a target material property $B_T$ (corresponding to the target material value line 308), such as a desired hardness or residual stress. Additionally or alternatively, $B_T$ is a minimum or maximum target value, or $B_T$ is a range of target values, where target material value line 308 would become a minimum value line, a maximum value line, or an area of target values. The target input value line 310 is then optionally a minimum input value line, a maximum input value line, an area of target input values, or, e.g., an average value line of the area of target input values.

AM processes are complex, and typically involve a plurality of targeted geometric or physical properties, e.g., a set of target characteristics, and a plurality of AM process inputs, e.g., a set of AM factors. Plot 300-B shows example relationships of each geometric or physical property (B-1, B-2, B-3) with each AM process input (A-1, A-2, A-3, A-4). For example, B-1, B-2, and B-3 represent height, width, and cross-section area, and A-1, A-2, A-3, A-4 represent speed, current, feed rate, and temperature. As in plot 300-A, a target geometric or physical value for each of B-1, B-2, and B-3 can be used to determine input values A-1, A-2, A-3, A-4 based on the relationships.

Visualising the one or more relationships offers multiple benefits, especially as one or more plots. It enhances understanding, simplifies complexity without losing essential information, supports decision-making, and facilitates effective communication of insights derived from the mathematical model. For example, plot 300-A or plot 300-B aid in identifying patterns, trends, and potential anomalies. Such outlier/anomaly detection can help maintain accuracy in the mathematical model. Moreover, the plots can be used for identifying relevant features for predictor and/or prediction function, further helping maintain accuracy in the mathematical model. Additionally, plot 300-B allows for comparing multiple variables, including analysis of trends across multiple relationships.

Figure 4 is directed towards a flow-chart illustrating a method for performing an automated AM process by generating a mathematical model. Specifically, Figure 4 illustrates a method 400 for determining a set of AM factors based on an obtained set of target characteristics using a mathematical model that estimates a relationship between AM factors and characteristics.

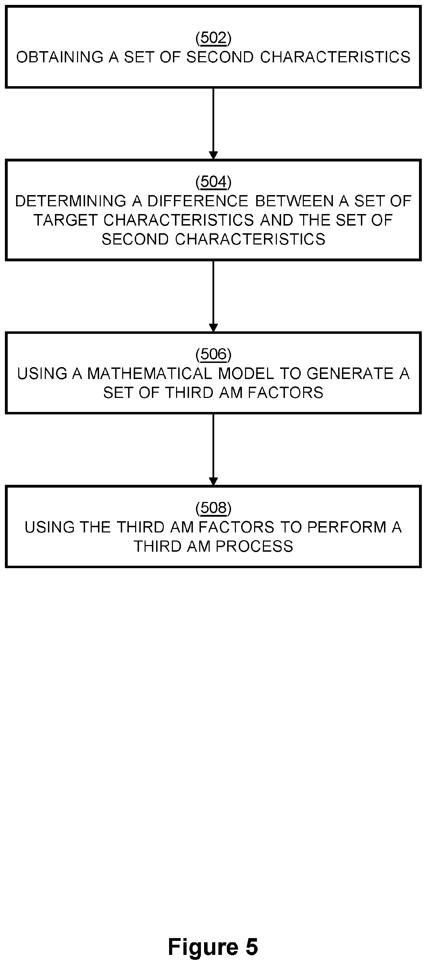

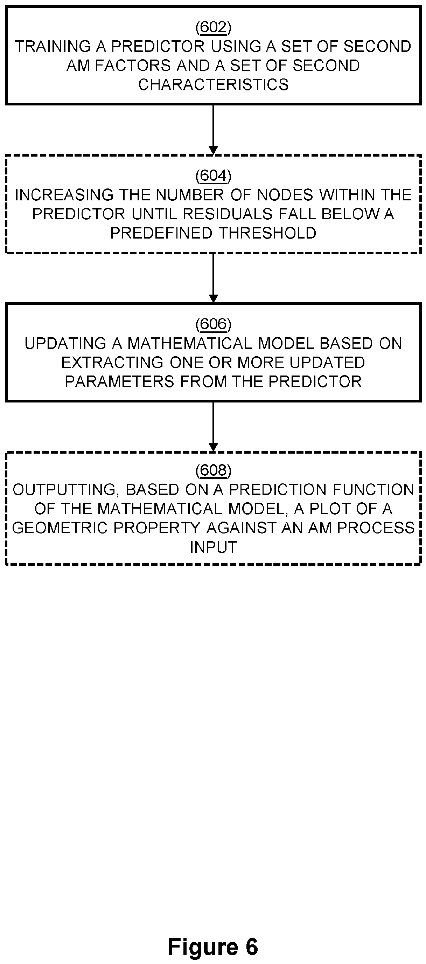

Any of the steps of method 400 can be performed outside of the order shown in Figure 4, and not all steps of method 400 shown are required. Additionally, any of the steps of method 500 of Figure 5 or method 600 of Figure 6 may be performed in addition, or instead of, the steps of method 400 listed in relation to Figure 4.

A relationship between AM factors and AM output characteristics is required to accurately determine AM factors based on target characteristics. Determining such a factors-characteristics relationship is performed in two steps: first, a predictor comprising a machine learning model is trained using known AM factors in combination with associated AM output characteristics; and second, a mathematical model is generated based on the predictor.

Using a machine learning model allows for an accurate AM apparatus-specific approximation of the relationship, without requiring extensive details about the set-up, material, or process that may not be known or fully understood in relation to base principals. A machine learning model approach therefore decreases the amount of computational resources, material resources, and time required to approximate the relationship compared to a purely simulation-based model. However, it is difficult to understand the relationship based on a machine learning model alone, due to the complexities of various algorithms and model architectures. The number of internal parameters of any one machine learning model can prohibit human understanding and can make standard quality-based assurance testing difficult or impossible. Similarly, fully reverse engineering a machine learning model can be a time and resource heavy process, and success is not guaranteed. Therefore, the second step is to generate a mathematical model based on extracting one or more predictor parameters. The predictor parameters are associated with one or more relevant internal parameters, such as weights or activation functions, from within the machine learning model. The mathematical model provides an explainable, reusable, and computationally low-resource approach to linking AM factors with geometric or physical characteristics of the output.

For example, the method 400 can be used by a combined hardware and software system for AM processes, such as system 100 of Figure 1 and system 200 of Figure 2. The system comprises a sensor, such as a linear laser scanning profilometer or an x-ray scanner. As the predictor comprises a machine learning model such as an artificial neural network, the data stream obtained from the sensor is used for training the predictor and/or used for determining AM factors. The system is designed to improve the precision and efficiency of the AM process by monitoring and analysing data from the manufacturing environment in real-time (e.g., data from the sensor is communicated to the GPU in under 1 second, such as at 10-100 Hz, e.g., 25 Hz), and using the mathematical model further optimizes the AM process.

The sensor, such as a profilometer, is optionally mounted in close proximity to e.g., an intensive light emitting energy source used for performing the AM process, or the sensor, such as a scanner, is manoeuvrable. The sensor further comprises a logical processing unit for compilation of the data and edge computing and communicates with a GPU-based server.

Converting sensor data to mathematical models can eliminate the need for extensive data storage, database maintenance, and signal jittering, resulting in the need for smaller and more efficient digital systems. Method 400 allows for the compression of large amounts of data into mathematical models, which can be easily stored and manipulated using standard digital systems. As a result, the use of mathematical models for data processing can significantly reduce the cost, computational resources, energy, and complexity of data storage and management, while also minimizing the negative impact of signal jittering on data accuracy. Therefore, method 400 provides an improved approach for data processing that leverages mathematical modelling techniques to reduce the resources and complexities associated with data storage and management.

The use of method 400 in combination with e.g., system 200 of Figure 2 above can result in improved quality control, compliance with standards, increased efficiency, enhanced safety, and reduced waste and required resources in the manufacturing process.

Method 400 comprises step 402, step 404, step 406, step 408, step 410, step 412, and step 410. Step 402 comprises obtaining a set of first AM factors; step 404 comprises obtaining a set of first characteristics; step 406 comprises training a predictor using the set of first AM factors and the set of first characteristics; step 408 comprises generating a mathematical model based on extracting one or more predictor parameters; step 410 comprises obtaining a set of target characteristics; step 412 comprises using the mathematical model to determine a set of second AM factors; and step 414 comprises using the set of second AM factors to perform a second AM process.

Step 402 comprises obtaining a set of first AM factors, wherein the set of first AM factors comprises one or more AM process inputs associated with performing a first AM process, such as from the AM apparatus 204 or processor 206. The one or more AM process inputs comprise process inputs/process parameters necessary for performing the first AM process, such as the input power.

For example, the first AM process is performed by an AM apparatus, such as AM apparatus 110 of Figure 1, and the first AM process is a welding process. Therefore, the set of first AM factors comprises weld speed, weld current, and wire feed rate. In this example, the AM apparatus is suitable for welding, e.g., the AM apparatus comprises a welding torch, and the AM process comprises welding a metal. Alternatively, the AM process comprises welding a plastic, ceramic, glass, composite, or biological material. Optionally, the AM process inputs are associated with limits of the AM apparatus performing the first AM process, such as the minimum and maximum power.

Step 404 comprises obtaining a set of first characteristics from a sensor, the first set of characteristics comprising one or more geometric or physical properties of a first AM output. Preferably, the sensor is configured to process sensor data into one or more geometric or physical properties. Alternatively, the sensor data is processed by a processor, such as processor 106 of Figure 1. For example, the sensor is an optical scanning sensor, e.g., a linear laser profilometer, or a high-speed x-ray scanner, e.g., configured for diffraction-based hardness and residual stress measurements.

Returning to the welding process example, the one or more geometric or physical properties comprise weld bead characteristics, such as any of the height, length, depth, width, and/or area of a plurality of weld beads that make up at least part of a first AM output generated from the first AM process, e.g., a welding workpiece generated from a welding process performed using the set of first AM factors. Preferably, the sensor is configured to operate even in bright arc condition, such that the set of first characteristics can be obtained while the AM process is ongoing. Other example geometric or physical properties for one or more weld beads include bead width, heat affected zone (HAZ) width, bead height, HAZ depth, layer thickness, hatch spacing, roundness, hardness, residual stress, or other relevant property.

In addition or as an alternative to one or more sensors configured to obtain topographical data, either directly or indirectly e.g., from processing point-cloud data, one or more sensors are optionally configured to obtain data associated with monitoring the AM apparatus, the AM process, the surrounding conditions, or the output from the AM process, such as temperature, acoustic wavelengths, motion data, one or more electromagnetic wavelengths, deviations, or a combination thereof. For example, the one or more sensors are configured to obtain hardness and/or residual stress measurements based on x-ray scanning. Optionally, the one or more sensors are configured to obtain geometric properties, physical properties, or a combination thereof, such that the first set of characteristics comprise one or more geometric properties, one or more physical properties, or one or more geometric and physical properties.

Optionally, the sensor is configured to obtain and process data real-time. For example, a processor, such as processor 106 of system 100 or processor 206 of system 200, receives data from the set of first characteristics within 1 second. Preferably, the processor comprises a GPU configured to obtain geometric or physical properties at a rate of 1-100 Hz, e.g., 25 Hz.

Step 406 comprises training a predictor using the set of first AM factors and the set of first characteristics. The predictor comprises a machine learning model configured to generate the set of first characteristics based on the set of first AM factors.

The machine learning model is configured to output one or more first characteristics (of the set of first characteristics) from an input comprising one or more first AM factors (of the set of first AM factors). The set of first AM factors and the set of first characteristics from step 402 and step 404 respectively form training data, and the machine learning model is training using standard supervised, unsupervised, or semi-supervised learning methods depending on machine learning model. For example, the machine learning model is a supervised artificial neural network (ANN) trained using backpropagation to minimise differences between outputs and the set of first characteristics. Alternatively, the machine learning model is an unsupervised algorithm, such as an autoencoder.

Returning to the welding process example, the predictor comprises an ANN configured to output the average height, the average width, and the average depth of a plurality of weld beads based on an input comprising weld speed, weld current, and wire feed rate. Optionally, the ANN is configured to output the height, width, and depth of each weld bead of the plurality of weld beads, such that the AM factors resulting in the lowest standard deviation in height, width, or cross-section area can be determined for a consistent and high-quality weld. Alternatively, the ANN is configured to output the total height, total width, and total area e.g., for a given stage of the AM process, representing the part-completed or finished 3-dimensional shape of the weld.

Optionally, the predictor comprises a plurality of machine learning models. For example, the predictor comprises a first machine learning model configured to generate the set of first characteristics based on the set of first AM factors, as discussed above, and a second machine learning model configured to identify deviations in the set of first characteristics, such as an autoencoder. Deviations can then be compensated for, such as using step 412 or method 500 below, and/or prevented from being used in training the first machine learning model. Alternatively, deviations can be detected by the sensor of step 404 above, or by the mathematical model of step 408 and step 412 below.

Step 408 comprises generating a mathematical model based on extracting one or more predictor parameters. The mathematical model comprises a prediction function, which mathematically represents an estimated/approximate relationship between one or more AM process inputs and one or more geometric or physical properties. The one or more predictor parameters are associated with internal parameters of the predictor of Step 406, such as weights, biases, or activation function. Internal parameters of the predictor are the values used to transform input data (e.g., AM factors) into output data (e.g., geometric or physical properties of the set of characteristics). These values change during training to transform the input data more accurately into the output data, such as by using backpropagation. Therefore, the internal parameters are associated with the relationship between the AM factors and geometric or physical properties of the set of characteristics.

Returning to the above welding process example where the predictor is an ANN, the prediction function mathematically represents an approximated relationship between i) example AM factors comprising the weld speed, weld current, and wire feed rate, and ii) example characteristics comprising the height, width, and cross-section area of weld beads. For example, the prediction function is a nonlinear mathematical expression comprising the one or more AM process inputs as variables, with coefficients based on the one or more predictor parameters, such that the one or more geometric or physical properties can be calculated. The coefficients depend on the specific AM apparatus, resulting in a mathematical model tailored to a specific AM process or AM apparatus. If the ANN has been trained on additional AM processes using, such as by repeating steps 402-406 for any number of sets, the approximated relationship represented by the prediction function of the mathematical model will become more generalised.

Unlike with complex "black-box" machine learning models, the mathematical model can be scrutinised and the approximate relationship can be analysed. An explainable mathematical model therefore results in a clear link between AM process inputs and geometric or physical properties of AM outputs, which can be modified, and reverse engineered to generate greater understanding of a highly complex relationship. Beneficially, the mathematical model is less resource heavy than a standard machine learning model. The mathematical model can therefore be updated and used with less energy consumption, computational resources, and time compared to many machine learning models. For example, the mathematical model, once generated, can be updated and operated using a smaller/more efficient GPU or a CPU-based processor, instead of needing the GPU requirements necessary for training and running a machine learning model.

In one example, the predictor comprises a single ANN with an input layer, and output layer, and a hidden layer where the number of nodes is determined using step 604 of method 600 below. The hidden layer is a dense layer, and the ANN is trained until a calculated R-Squared value is above 0.999. The R-Squared value is a statistical measure that ranges between 0 and 1, where 0 would represent the ANN predicting 0% of the relationship between the first AM factors and the first characteristics, and 1 would represent the ANN predicting 100% of the relationship. All nodes use a TanH activation function and a boosting algorithm is also applied, such as AdaBoost or gradient boost. In this example, the AM process is welding and the AM apparatus comprises a welding power source. The first AM factors comprise travel speed, power source voltage, power source current, and wire speed, and the first characteristics comprise average cross-section area, average width, and average height.

Internal parameters of the trained ANN, e.g., weights and activation functions, are extracted to form a prediction formula using standard mathematical methods. The mathematical model comprises one or more prediction formula, and each prediction formula has either a predefined structure or is tailored to each predictor. An example one-dimensional prediction formula to determine height, h, is provided below:

$$h = \text{TanH}(0.2 + 0.1 * \log(\frac{(-99.7 + Current)}{(222.7 - Current)}) - 0.4 * \log(\frac{(-27.8 + Voltage)}{(31,5 - Voltage)}) -$$

$$0.03 * \log(\frac{(-3,6 + Wire\ Speed)}{(9,4 - Wire\ Speed)}) - 0.1 * \log(\frac{(-2.2 + Welding\ Speed)}{(7.9 - Welding\ Speed)})).$$

As is typical, the activation function TanH is defined as:

$$f(x) = \frac{e^x - e^{-x}}{e^x + e^{-x}}.$$

In the example of a node within the hidden layer of the above ANN, x would be the sum of weighted inputs to the node.

The prediction formula can also be multi-dimensional, utilising vectors, tensors, and/ linear algebra to mathematically express the factors-characteristics relationship.

Optionally, alternative algorithms, structures, thresholds, statistical measures, activation functions, training methods, or combinations thereof are used. For example, alternative activation functions include sigmoid, linear, Gaussian, rectified linear unit (ReLU), or other activation functions not listed here. Alternatively or additionally, multiple machine learning models are used, e.g., depending on the obtained sensor data. For example, multiple machine learning models are trained in step 406, but only internal parameters from the most accurate machine learning model(s) are extracted in step 408 to generate the mathematical model. In another example, internal parameters from multiple machine learning models are extracted in step 408 to generate the mathematical model, which comprises one or more prediction formulae. Additionally, the mathematical model is optionally generated using standard reverse engineering approaches to extracting a relationship between inputs and outputs from machine learning models, e.g., recovering the ratio between weights and biases.

Further optionally, the mathematical model comprises multiple prediction formulae. For example, a first prediction formula is generated based on extracting internal parameters from a first machine learning model of the predictor, and the second prediction formula is generated based on extracting internal parameters from a second machine learning model of the predictor. Either the best prediction formula, e.g., the most relevant for the specific AM process or the most accurate, is selected or one or more prediction formulae are combined within the mathematical model.

By generating the mathematical model from a machine learning algorithm, less time, energy, equipment, material, and computational resources are required compared to generating a mathematical model from base principals. For example, generating a mathematical model from base principals (e.g., known physics-, chemistry-, electronics-, and mechanics-based equations and theories) would require immense quantities of data and a complex multiple-sensor system. Substantial data processing would also be required, as the particle-level data necessary for an accurate mathematical model cannot be directly obtained from readily available sensors. Additionally, all the interactions between base principals are still not fully understood due to the complexity of AM processing. Therefore, even if it were possible, such a model would be large and prohibitively complex, requiring immense processing capabilities to operate accurately. In contrast, the computational requirements of extracting predictor parameters and formulating a mathematical model as in step 408 are lower without compromising on accuracy.

Step 410 comprises obtaining a set of target characteristics, wherein the set of target characteristics comprise one or more geometric or physical properties of a target AM output. For example, the set of target characteristics are target characteristics 102 of system 100 above.

Returning to the above welding process example, the target AM output is a high-quality weld with a desired average height, width, depth and cross-section area for each weld bead. The set of target characteristics therefore comprise the average height, width, depth, and cross-section area of the target AM output.

The set of target characteristics are obtained by a processor (e.g., processor 106 of system 100), such as from storage or from an input device, or are obtained by determining the heigh quality output that can be generated from the AM apparatus and AM process, e.g., based on the available materials and parameter space. Optionally, the target characteristics are predefined. Alternatively, the target characteristics are based on training requirements for the predictor, such as if more training data is required due to, e.g., the accuracy being below a predetermined threshold.

Step 412 comprises using the mathematical model to determine a set of second AM factors based on the set of target characteristics. The set of second AM factors comprise one or more AM process inputs associated with performing a second AM process. For example, the set of second AM factors are AM factors 108 of system 100 above.

Returning to the above welding process example, the mathematical model comprises an approximate relationship between AM process inputs and geometric or physical properties. To obtain the average height, width, and cross-section area of the target AM output as defined by the set of target characteristics, a specific set of inputs must be used by the AM apparatus. These specific inputs can be determined based on the relationship between AM process inputs and geometric or physical properties defined by the mathematical model, allowing the required process parameters, e.g., travel speed, current, and wire feeding rate, to be identified.

Preferably, the mathematical model is tailored to each AM apparatus and/or AM process in steps 406 and 408, such that limits to available parameters are enforced by boundary conditions. For example, the maximum current, voltage, wire speed, etc. are incorporated into the mathematical model, and the set of second AM factors identified by the mathematical model are within safe operational limits of the AM apparatus and/or AM process. Optionally, the limits are obtained from the AM apparatus and, further optionally, these limits are adjustable, such as by an operator of the AM apparatus or other safety system to increase safety and efficiency of the AM process.

Optionally, determining a set of second AM factors comprises calculating one or more process inputs of the set of second AM factors. Further optionally, determining a set of second AM factors comprises identifying one or more relevant AM process inputs to be included in the set of second AM factors.

Step 414 comprises using the set of second AM factors to perform the second AM process, thereby generating a second AM output. For example, referencing system 100 above, the AM apparatus 110 uses the AM factors 108 identified using the mathematical model to perform an AM process 112 to generate an AM output 114. Ideally, the second AM output comprises the target characteristics of the target AM output, such that the second AM output is a generated version of the target AM output. Any differences between the second AM output and the target AM output can be used to update and, preferably, improve the mathematical model, as described in more detail in reference to method 500 below.

As referenced above, any of the steps of method 400 can be performed alone or repeated. For example, once a mathematical model has been generated, step 410 and step 412 can be repeated to determine AM factors required to generate specific target AM outputs (as in system 100 above) or to continually update the AM process to maintain quality and efficiency. In another example, step 402 and step 404 can be repeated and, optionally, the obtained data stored in order to generate a large training data set for training the predictor. In another example, step 414 does not need to be performed, as completing the second AM process may no longer be necessary, or it may be performed by an external AM apparatus.

Beneficially, method 400 provides an efficient and reliable means for controlling the deposition and manufacturing processes, thereby improving the quality and accuracy of the final product. The disclosed steps of method 400 can be performed for an unknown set of materials or be used for a material that is previously trained and found in a system database, which can be accessed by a processor and/or the predictor and mathematical model. In the latter example, method 400 can start from step 410 and performed using, for example, system 100 of Figure 1. The apparatus for performing method 400 comprises a processor and, optionally, a memory that stores a set of instructions for executing the automatic selection of AM process parameters and controlling the deposition in real-time. The processor is configured to execute the set of instructions stored in the memory to automatically select AM process parameters for the target materials and control the deposition in real-time based on the selected parameters.

Figure 5 is directed to a flow-chart illustrating a method for updating an automated AM process. Specifically, Figure 5 is directed towards using the mathematical model of method 400 to generate new/modified AM factors, such that an AM process can be updated, resulting in an improved AM output. Preferably, method 500 is used to update AM factors during an AM process, such that the AM process in monitored and updated to increase the quality of the AM output.

Any of the steps of method 500 can be performed outside of the order shown in Figure 5, and not all steps of method 500 shown are required in order to perform method 500. Additionally, any of the steps of method 400 of Figure 4 or method 600 of Figure 6 may be performed in addition or instead of the steps of method 500 listed here.

As discussed above, differences between the second AM output and the target AM output can be detected. AM processes are highly complex, and minute changes in material properties, environmental factors, and other conditions can result in alternations to generated AM outputs. Therefore, it is important to use the mathematical model to compensate for such changes by determining new AM factors. By using method 500 throughout the AM process, the end-product (the final AM output) will be high quality without necessarily requiring manual intervention.

Method 500 comprises step 502, step 504, step 506, and step 508. Step 502 comprises obtaining a set of second characteristics; step 504 comprises determining a difference between a set of target characteristics and the set of second characteristics; step 506 comprises using a mathematical model to generate a set of third AM factors; and step 508 comprises using the third set of AM factors to perform a third AM process.

Step 502 comprises obtaining, such as from the sensor, a set of second characteristics. The set of second characteristics comprises one or more geometric or physical properties of a second AM output, such as the second AM output generated in step 414 of method 400 above.

Returning to the aforementioned welding process example, the sensor determines the average height, width, and cross-section area of weld beads of the second AM output.

Step 504 comprises determining a difference between a set of target characteristics, such as the set of target characteristics obtained in step 410 of method 400 above, and the set of second characteristics. For example, the difference is a collated difference of each corresponding geometric or physical property of the set of target characteristics and the set of second characteristics.

Returning to the above welding process example, the difference comprises: a difference in the average height of the second AM output weld beads and the average height of the target AM output weld beads; a difference in the average width of the second AM output weld beads and the average width of the target AM output weld beads; and a difference in the average cross-section area of the second AM output weld beads and the average cross-section area of the target AM output weld beads.

Alternatively, step 504 comprises determining if deviations are present in the set of second characteristics, such as by use of the mathematical model, the predictor, a processor, or the sensor. Deviation detection, also known as anomaly detection, can be achieved without comparison to the set of target characteristics. For example, the sensor can be configured to determine whether a geometric or physical property exceeds a predefined range. In another example, the predictor comprises a deviation detection algorithm, such as an autoencoder.

Step 506 comprises using a mathematical model, such as the mathematical model generated in step 408 of method 400, to modify one or more AM process inputs of a set of second AM factors, such as the set of second AM factors identified in step 412 of method 400. Modification is based on the difference determined in step 504 above, and results in the generation of a set of third AM factors. Therefore, the set of third AM factors is a modified set of second AM factors.

Returning to the above welding process example, the set of second AM factors are modified using the mathematical model to, e.g., reduce the welding speed, and hence the third AM factors comprise a reduced welding speed in respect to the second AM factors and a maintained welding current and wire feed rate. The welding speed was reduced as the mathematical model showed the determined difference could be compensated by (in this example) adjusting the welding speed by a set quantity equal to the reduction.

Step 508 comprises using the third AM factors to perform a third AM process. For example, the AM apparatus performs an AM process using the AM process inputs of the third AM factors. The third AM process results in the generation of a third AM output. Due to the modifications made using the mathematical model in step 506, any difference between the target AM output and the third AM output are decreased in comparison to the difference determined in step 504, such that the third AM output is closer to the target AM output in relation to associated geometric or physical properties.

Returning to the above welding speed example, the reduction in welding speed resulted an average height, width, and cross-section area of welding beads for the third AM output within a quantity threshold associated with the set of target characteristics, and hence the third AM output is considered high quality.

Method 500 can be repeated such that AM process inputs are continually modified and improved to result in high quality AM outputs. For example, step 502 is repeated such that a set of third characteristics are obtained comprising one or more geometric or physical properties of the third AM output (generated as a result of performing the third AM process in step 508). Step 504 is repeated such that a difference between the set of third characteristics and the set of target characteristics is determined. Step 506 is optionally repeated as, for example, step 506 may not be required if the difference is within a quality threshold. If step 506 is repeated, the mathematical model is used to generate a set of fourth AM factors, which can then be used in step 508 to perform a fourth AM process.

Preferably, the first, second, third, or fourth AM processes are one or more continuous AM processes. For example, the first, second, third and fourth AM processes are a single AM process at multiple subsequent time points, where: the first AM process is the start of the single AM process used to train the predictor and mathematical model such that it is tailored for the specific single AM process; the second AM process is a continuation of the first AM process (e.g. step 410 is performed before step 402 of method 400) and represents a correction and/modification of the first AM process based improved AM factors obtained using the mathematical model; the third AM process is a correction and/or modification of the second AM process based on improved AM factors obtained using the mathematical model (e.g. using method 500); and the fourth AM process is a correction and/or modification of the third AM process to result in even higher quality outputs. Therefore, the mathematical model can be used to continually improve and update the AM process.

Figure 6 shows a flow-chart illustrating a method for updating a mathematical model and outputting a plot. Specifically, Figure 6 is directed towards multiple interchangeable methods for training the predictor, updating the mathematical model, and outputting a plot based on the relationship(s) defined by the mathematical model.

Any of the steps of method 600 can be performed outside of the order shown in Figure 6, and not all steps of method 600 shown are required in order to perform method 600. Each step of method 600 may be performed individually. Additionally, any of the steps of method 400 of Figure 4 or method 500 of Figure 5 may be performed in addition or instead of the steps of method 600 listed here.

Training the predictor using additional data can help improve the accuracy of characteristics generated by the machine learning model. Data associated with a particular AM apparatus and/or AM process tailors the predictor to more accurately generate characteristics of AM outputs generated by the particular AM apparatus/process. Data associated with a different AM apparatus and/or AM process generalises the predictor, so generated characteristics from additional AM apparatus/processes are more accurate.

Updating the mathematical model directly does not necessitate retraining/updating the predictor, which requires additional computational resources in comparison to the mathematical model, and is instead achieved by modifying the prediction function. For example, the mathematical model is updated due to a change in operating or environmental conditions associated with the AM apparatus or AM process.

However, if differences between generated characteristics and target characteristics are substantial, e.g., a difference determined in step 504 of method 500 is above a predefined threshold, updating the predictor may be required. For example, there may be a change in AM process and/or AM apparatus that cannot be accurately compensated for by updating the mathematical model directly. After the predictor is trained/re-trained/updated, the one or more predictor parameters extracted in generating the mathematical change. Therefore, the mathematical model can be updated based on extracting one or more updated parameters from the retrained predictor.

Method 600 comprises step 602, step 604, step 606, and step 608, where any of the steps can be performed individually or in combination. Step 602 comprises training a predictor using a second set of AM factors and a set of second AM characteristics; step 604 comprises increasing the number of nodes within the predictor until residuals fall below a predefined threshold; step 606 comprises updating a mathematical model based on extracting one or more updated parameters from the predictor; and step 608 comprises outputting, based on a prediction function of the mathematical model, a plot of a geometric or physical property against an AM process input.

Step 602 comprises training a predictor using a set of second AM factors and a set of second characteristics, such as the predictor and sets of method 600. For example, the predictor is initially trained on the set of first AM factors and the set of first characteristics. Training the predictor further on the set of second AM factors and the set of second characteristics then improves the predictor, as additional training data results in more accurately generated characteristics.

Returning to the aforementioned welding process example, the predictor comprises an ANN trained on first AM factors and corresponding first characteristics associated with the first AM output generated using the first AM factors. The second characteristics are associated with the second AM output generating using the second AM factors, where the same AM apparatus is used. Therefore, the re-trained ANN is tailored to provide more accurate characteristics for the specific AM apparatus.

Step 604 comprises increasing the number of nodes within the predictor until residuals fall below a predefined threshold. This step may be performed in addition to step 602, in addition to alternative steps such as step 406 of method 400, or separately.

Returning to the above welding process example, the ANN is trained for 10 epochs using the set of second characteristics and the set of second AM factors. The difference between characteristics generated from the predictor and the set of second characteristics is above the predefined threshold, so an additional node is added to the hidden layer of the ANN. The ANN comprising an additional node is then trained for 10 epochs using the same data. The difference between characteristics generated from the predictor and the set of second characteristics is then below the predefined threshold, and the ANN is accurate enough to not require an additional node. Beneficially, this method of increasing the number of nodes based on residuals allows for preservation of computational resources, as the ANN is only as large as is necessary to generate outputs with the required accuracy.

If increasing the number of nodes is not relevant, such as in a scenario where the predictor does not comprise a relevant machine learning model relative such as a neural network, alternative hyperparameters can be increased in the place of nodes. Additionally, residuals (the difference between generated and target outputs from the machine learning model) may not be readily available, such as when using unsupervised algorithms, and alternative threshold-based accuracy determination can be used in place of residuals falling below a predefined threshold.

Step 606 comprises updating a mathematical model based on extracting one or more updated parameters from the predictor. The one or more updated parameters are associated with internal parameters of the predictor after training/re-training/updating. For example, step 606 can follow step 602, 604, or step 406 of method 400.

Returning to the above welding process example, the ANN is retrained and modified with an additional node, and hence the internal parameters have changed. The extracted one or more updated parameters are then used to update e.g., the coefficients of the prediction function, and hence the mathematical model is updated. Beneficially, updating the mathematical model based on an updated predictor allows for increased accuracy in determining AM factors based on targeted characteristics without impacting the increased explainability and efficiency from using a mathematical model.

Step 608 comprises outputting, based on the prediction function, a plot of a geometric or physical property of the set of first characteristics against an AM process input of the set of first AM factors. For example, step 608 comprises outputting plot 300-A of Figure 3, described below.

Returning to the above welding process example, step 608 comprises outputting a plot of e.g., height against e.g., welding speed based on the relationship between heigh, and welding speed represented by the prediction function.

Alternatively, a plurality of geometric or physical properties is plotted against a plurality of AM process inputs, wither individually or in combination, such as shown by plot 300-B of Figure 3. If step 608 is performed after step 606, step 608 may instead comprise outputting, based on the updated prediction function, a plot of a geometric or physical property of either the first characteristics or second characteristics against an AM process input of the first AM factors or second AM factors.

Figure 7 shows an example computing system. Specifically, Figure 7 shows a block diagram of an embodiment of a computing system 700 according to example embodiments of the present disclosure.

Computing system 700 can be configured to perform any of the operations disclosed herein such as, for example, any of the operations discussed with reference to method 400 of Figure 4. Computing system 700 includes one or more computing devices 702. Computing device 702 of computing system 700 comprises one or more processors 704 and memory 706. device(s) 702 of computing system 700 comprise one or more processors 704 and memory 706. One or more processors 704 can be any general-purpose processor(s) configured to execute a set of instructions. For example, one or more processors 704 can be one or more general-purpose processors, one or more field programmable gate array (FPGA), and/or one or more application specific integrated circuits (ASIC). In one embodiment, one or more processors 704 include one processor. Alternatively, one or more processors 704 include a plurality of processors that are operatively connected. One or more processors 704 are communicatively coupled to memory 706 via address bus 708, control bus 710, and data bus 712. Memory 706 can be a random-access memory (RAM), a read-only memory (ROM), a persistent storage device such as a hard drive, an erasable programmable read-only memory (EPROM), and/or the like. Computing device(s) 702 further comprise input/output (I/O) interface 714 communicatively coupled to address bus 708, control bus 710, and data bus 712.

Memory 706 can store information that can be accessed by one or more processors 704. For instance, memory 706 (e g., one or more non-transitory computer-readable storage mediums, memory devices) can include computer-readable instructions (not shown) that can be executed by one or more processors 704. The computer-readable instructions can be software written in any suitable programming language or can be implemented in hardware. Additionally, or alternatively, the computer-readable instructions can be executed in logically and/or virtually separate threads on one or more processors 704. For example, memory 706 can store instructions (not shown) that when executed by one or more processors 704 cause one or more processors 704 to perform operations such as any of the operations and functions for which computing system 700 is configured, as described herein. In addition, or alternatively, memory 706 can store data (not shown) that can be obtained, received, accessed, written, manipulated, created, and/or stored. The data can include, for instance, the data and/or information described herein in relation to Figures 1 to 6. In some implementations, computing device(s) 702 can obtain from and/or store data in one or more memory device(s) that are remote from the computing system 700.

Computing system 700 further comprises storage unit 716, network interface 718, input controller 720, and output controller 722. Storage unit 716, network interface 718, input controller 720, and output controller 722 are communicatively coupled to central control unit or computing devices 702 via I/O interface 714.

Storage unit 716 is a computer readable medium, preferably a non-transitory computer readable medium, comprising one or more programs, the one or more programs comprising instructions which when executed by one or more processors 704 cause computing system 700 to perform the method steps of the present disclosure. Alternatively, storage unit 716 is a transitory computer readable medium. Storage unit 716 can be a persistent storage device such as a hard drive, a cloud storage device, or any other appropriate storage device.

Network interface 718 can be a Wi-Fi module, a network interface card, a Bluetooth module, and/or any other suitable wired or wireless communication device. In an embodiment, network interface 718 is configured to connect to a network such as a local area network (LAN), or a wide area network (WAN), the Internet, or an intranet.

Figure 7 illustrates one example computer system 700 that can be used to implement the present disclosure. Other computing systems can be used as well. Computing tasks discussed herein as being performed at and/or by one or more functional unit(s) (e.g., as described in relation to Figure 2) can instead be performed remote from the respective system, or vice versa. Such configurations can be implemented without deviating from the scope of the present disclosure. The use of computer-based systems allows for a great variety of possible configurations, combinations, and divisions of tasks and functionality between and among components. Computer-implemented operations can be performed on a single component or across multiple components. Computer-implemented tasks and/or operations can be performed sequentially or in parallel. Data and instructions can be stored in a single memory device or across multiple memory devices.

Regarding the above disclosure, references to items in the singular should be understood to include items in the plural, and vice versa, unless explicitly stated otherwise or clear from the context. Additionally, grammatical conjunctions are intended to express any and all disjunctive and conjunctive combinations of conjoined clauses, sentences, words, and the like, unless otherwise stated or clear from the context. Thus, the term "or" should generally be understood to mean "and/or" and so forth. The use of any and all examples, or exemplary language ("e.g.," "such as," "including," or the like) provided herein, is intended merely to better illuminate the embodiments and does not pose a limitation on the scope of the embodiments or the claims.

Methods described herein may relate to a computer storage product with a non-transitory computer-readable medium (also can be referred to as a non-transitory processor-readable medium) having instructions or computer code thereon for performing various computer-implemented operations, such that the methods are performed. The computer-readable medium (or processor-readable medium) is non-transitory in the sense that it does not include transitory propagating signals per se (e.g., a propagating electromagnetic wave carrying information on a transmission medium such as space or a cable). The media and computer code (also can be referred to as code) may be those designed and constructed for the specific purpose or purposes. Examples of non-transitory computer-readable media include, but are not limited to, magnetic storage media such as hard disks, floppy disks, and magnetic tape, optical storage media such as Compact Disc/Digital Video Discs (CD/DVDs), Compact Disc-Read Only Memories (CD-ROMs), and holographic devices; magneto-optical storage media such as optical disks; carrier wave signal processing modules; and hardware devices that are specially configured to store and execute program code, such as Application-Specific Integrated Circuits (ASICs), Programmable Logic Devices (PLDs), Read-Only Memory (ROM) and Random-Access Memory (RAM) devices. Other embodiments described herein relate to a transitory computer program product, which can include, for example, the instructions and/or computer code discussed herein.

Some embodiments and/or methods described herein can be performed by software (executed on hardware), hardware, or a combination thereof. Hardware modules include, for example, a general-purpose processor, a field programmable gate array (FPGA), and/or an application specific integrated circuit (ASIC). Software modules (executed on hardware) can be expressed in a variety of software languages (e.g., computer code), including C, C++, Java, Ruby, Visual Basic, Python, and/or other object-oriented, procedural, or other programming language and development tools. Examples of computer code include, but are not limited to, micro-code or micro-instructions, machine instructions, such as produced by a compiler, code used to produce a web service, and files containing higher-level instructions that are executed by a computer using an interpreter. For example, embodiments can be implemented using imperative programming languages (e.g., C, Fortran, etc.), functional programming languages (Haskell, Erlang, etc.), logical programming languages (e.g., Prolog), object-oriented programming languages (e.g., Java, C++, etc.) or other suitable programming languages and/or development tools. Additional examples of computer code include, but are not limited to, control signals, encrypted code, and compressed code. Optionally, the embodiments and/or methods described herein are implemented using an operating system such as Robot Operating System (ROS).

**Claims**

1. A method for performing an automated additive manufacturing (AM) process, the method comprising:

   obtaining a set of first AM factors, wherein the set of first AM factors comprises one or more AM process inputs associated with performing a first AM process;
   obtaining, from a sensor, a set of first characteristics comprising one or more geometric or physical properties of a first AM output, wherein the first AM output is generated by performing the first AM process using the set of first AM factors;
   training a predictor using the set of first AM factors and the set of first characteristics, wherein the predictor is a machine learning model configured to generate the set of first characteristics based on the set of first AM factors;
generating a mathematical model based on extracting one or more predictor parameters, the mathematical model comprising a prediction function representing an estimated relationship between the one or more AM process inputs and the one or more geometric or physical properties, wherein the one or more predictor parameters are associated with internal parameters of the predictor;
obtaining a set of target characteristics, wherein the set of target characteristics comprise one or more geometric or physical properties of a target AM output;
using the mathematical model to determine a set of second AM factors based on the set of target characteristics, wherein the set of second AM factors comprise one or more AM process inputs associated with performing a second AM process; and
using the set of second AM factors to perform the second AM process, thereby generating a second AM output.

2. The method of claim 1, further comprising:

   obtaining, from the sensor, a set of second characteristics comprising one or more geometric or physical properties of the second AM output;
   determining a difference between the set of target characteristics and the set of second characteristics or a deviation in the set of second characteristics; and
   using the mathematical model, modifying one or more AM process inputs of the set of second AM factors based on the difference or the deviation, thereby generating a set of third AM factors.

3. The method of claim 2, further comprising using the set of third AM factors to perform a third AM process.

4. The method of any preceding claim, further comprising:

   training the predictor using the set of second AM factors and a set of second characteristics comprising one or more geometric or physical properties of the second AM output; and
   updating the mathematical model based on extracting one or more updated parameters from the predictor.

5. The method of any preceding claim, wherein the predictor comprises an artificial neural network (ANN), the ANN comprising at least one hidden layer and one or more nodes.

6. The method of claim 5, wherein training the predictor comprises increasing the number of nodes within the ANN until residuals fall below a predefined threshold.

7. The method of claim 5 or 6, wherein the one or more predictor parameters are associated with any of: one or more weights, one or more biases, or one or more activation functions of the predictor.

8. The method of claim 7, wherein the prediction function is a nonlinear expression comprising the one or more AM process inputs as variables, and wherein coefficients are based on the one or more predictor parameters.

9. The method of any preceding claim, wherein the AM process comprises depositing a plurality of weld beads, and wherein one or more geometric or physical properties comprises any of height, width, cross-section area, hardness or residual stresses for at least one of the plurality of weld beads.

10. The method of claim 9, wherein the set of target characteristics is determined based on minimising standard deviation in the one or more geometric or physical properties of the plurality of weld beads.

11. The method of any preceding claim, wherein the target AM output has a predefined geometry.

12. The method of any preceding claim, further comprising outputting, based on the prediction function, a plot of a geometric or physical property of the set of first characteristics against an AM process input of the set of first AM factors.

13. The method of any preceding claim, wherein the one or more AM process inputs comprise any of current, voltage, speed, feeding rate, power, temperature, or physical properties of the material.

14. A system comprising:

apparatus configured to perform one or more additive manufacturing (AM) processes;
a sensor configured to determine one or more geometric or physical properties of an output of the one or more AM processes;
a GPU processor configured to obtain data from the apparatus and the sensor; and
a memory storing instructions that, when executed, cause the system to perform the method of any of claims 1-13.

15. A computer-readable medium storing instructions for performing the method of any of claims 1-13.

100

104

102

106

116    108

110

112

(114)

**Figure 1**

**Figure 2**

300-A

B

310

$B_T$

312

308

306

304

302

$A_T$

A

300-B

B-3

B-2

B-1

A-1    A-2    A-3    A-4

**Figure 3**

(402)
OBTAINING A SET OF FIRST AM FACTORS

(404)
OBTAINING A SET OF FIRST CHARACTERISTICS

(406)
TRAINING A PREDICTOR USING THE SET OF FIRST AM FACTORS AND THE SET OF FIRST CHARACTERISTICS

(408)
GENERATING A MATHEMATICAL MODEL BASED ON EXTRACTING ONE OR MORE PREDICTOR PARAMETERS

(410)
OBTAINING A SET OF TARGET CHARACTERISTICS

(412)
USING THE MATHEMATICAL MODEL TO DETERMINE A SET OF SECOND AM FACTORS

(414)
USING THE SET OF SECOND AM FACTORS TO PERFORM A SECOND AM PROCESS

**Figure 4**

```
┌─────────────────────────────────────────────┐
│                    (502)                      │
│  OBTAINING A SET OF SECOND CHARACTERISTICS    │
└─────────────────────────────────────────────┘
                       │
                       ▼
┌─────────────────────────────────────────────┐
│                    (504)                      │
│  DETERMINING A DIFFERENCE BETWEEN A SET OF    │
│    TARGET CHARACTERISTICS AND THE SET OF      │
│            SECOND CHARACTERISTICS             │
└─────────────────────────────────────────────┘
                       │
                       ▼
┌─────────────────────────────────────────────┐
│                    (506)                      │
│  USING A MATHEMATICAL MODEL TO GENERATE A     │
│           SET OF THIRD AM FACTORS             │
└─────────────────────────────────────────────┘
                       │
                       ▼
┌─────────────────────────────────────────────┐
│                    (508)                      │
│  USING THE THIRD AM FACTORS TO PERFORM A      │
│             THIRD AM PROCESS                  │
└─────────────────────────────────────────────┘
```

**Figure 5**

```
┌─────────────────────────────────────────────────┐
│                     (602)                        │
│      TRAINING A PREDICTOR USING A SET OF SECOND  │
│         AM FACTORS AND A SET OF SECOND           │
│                CHARACTERISTICS                   │
└─────────────────────────────────────────────────┘
                        │
                        ▼
┌ ─ ─ ─ ─ ─ ─ ─ ─ ─ ─ ─ ─ ─ ─ ─ ─ ─ ─ ─ ─ ─ ─ ─ ┐
│                     (604)                        │
│    INCREASING THE NUMBER OF NODES WITHIN THE     │
│     PREDICTOR UNTIL RESIDUALS FALL BELOW A       │
│              PREDEFINED THRESHOLD                │
└ ─ ─ ─ ─ ─ ─ ─ ─ ─ ─ ─ ─ ─ ─ ─ ─ ─ ─ ─ ─ ─ ─ ─ ┘
                        │
                        ▼
┌─────────────────────────────────────────────────┐
│                     (606)                        │
│      UPDATING A MATHEMATICAL MODEL BASED ON      │
│         EXTRACTING ONE OR MORE UPDATED           │
│         PARAMETERS FROM THE PREDICTOR            │
└─────────────────────────────────────────────────┘
                        │
                        ▼
┌ ─ ─ ─ ─ ─ ─ ─ ─ ─ ─ ─ ─ ─ ─ ─ ─ ─ ─ ─ ─ ─ ─ ─ ┐
│                     (608)                        │
│   OUTPUTTING, BASED ON A PREDICTION FUNCTION     │
│     OF THE MATHEMATICAL MODEL, A PLOT OF A       │
│   GEOMETRIC PROPERTY AGAINST AN AM PROCESS       │
│                    INPUT                         │
└ ─ ─ ─ ─ ─ ─ ─ ─ ─ ─ ─ ─ ─ ─ ─ ─ ─ ─ ─ ─ ─ ─ ─ ┘
```

**Figure 6**

**Figure 7**

Europäisches Patentamt
European Patent Office
Office européen des brevets

# EUROPEAN SEARCH REPORT

**Application Number**

EP 23 21 4608

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/259099 A1 (HUANG SHUO [JP]) 17 August 2023 (2023-08-17) * paragraphs [0054], [0068] - [0089], [0103]; claims; figures 7,8 * ----- | 1-15 | INV. B23K9/04 B23K31/00 B33Y10/00 G06N3/09 |

**TECHNICAL FIELDS SEARCHED (IPC)**

B23K
B33Y
G06N

The present search report has been drawn up for all claims

| Place of search | Date of completion of the search | Examiner |
|---|---|---|
| Munich | 13 June 2024 | Caubet, J |

EPO FORM 1503 03.82 (P04C01)

## ANNEX TO THE EUROPEAN SEARCH REPORT
## ON EUROPEAN PATENT APPLICATION NO.

EP 23 21 4608

This annex lists the patent family members relating to the patent documents cited in the above-mentioned European search report.
The members are as contained in the European Patent Office EDP file on
The European Patent Office is in no way liable for these particulars which are merely given for the purpose of information.

13-06-2024

| Patent document cited in search report | Publication date | Patent family member(s) | | Publication date |
|---|---|---|---|---|
| US 2023259099 A1 | 17-08-2023 | CN | 116194242 A | 30-05-2023 |
| | | EP | 4173750 A1 | 03-05-2023 |
| | | JP | 7343454 B2 | 12-09-2023 |
| | | JP | 2022020339 A | 01-02-2022 |
| | | US | 2023259099 A1 | 17-08-2023 |
| | | WO | 2022019013 A1 | 27-01-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20180264553 A1